(19) Europäisches Patentamt
European Patent Office
Office européen des brevets

(11) Publication number: 0 483 406 A1

# (12) EUROPEAN PATENT APPLICATION

(21) Application number: **90120964.3**

(51) Int. Cl.5: **G11B 5/702**

(22) Date of filing: **01.11.90**

(43) Date of publication of application:
**06.05.92 Bulletin 92/19**

(84) Designated Contracting States:
**BE DE ES FR GB**

(71) Applicant: **DAINICHISEIKA COLOR & CHEMICALS MFG. CO. LTD.**
**7-6 Bakuro-cho 1-chome Nihonbashi**
**Chuo-ku Tokyo 103(JP)**
Applicant: **UKIMA CHEMICALS & COLOUR Mfg. Co. Ltd.**
**7-6 Bakuro-cho 1-chome Nihonbashi**
**Chuo-ku Tokyo(JP)**

(72) Inventor: **Hirose, Setsuo**
**119-1 Douniwa, Yoshikawa-machi**
**Kitakatsushika-gun, Saitama-ken(JP)**
Inventor: **Ueno, Singo**
**3-1-10 Suzuya**
**Yono-shi, Saitama-ken(JP)**
Inventor: **Kuriyama, Katsumi**
**1135-1 Simomakuri**
**Koshigaya-shi, Saitama-ken(JP)**

(74) Representative: **Türk, Gille, Hrabal**
**Brucknerstrasse 20**
**W-4000 Düsseldorf 13(DE)**

## (54) A magnetic recording medium.

(57) A magnetic recording medium comprising a non-magnetic supporting material and a magnetic layer which is made by dispersing ferromagnetic powder in a binding material and coated on the supporting material is characterized in that the binding material comprises a component made by graft polymerization of acrylic macromonomer having two terminal hydroxy functional groups and a molecular weight in the range from 1,000 to 10,000 to polyurethane resin.

The problem of compatibility which occurs when acrylic resins and polyurethane resins are mixed together is solved and excellent properties of both of acrylic resins and polyurethane resins are exhibited simultaneously. Affinity between the binding material and magnetic powder is enhanced and the magnetic powder is dispersed into the binding material more homogeneously. Thus, high performance magnetic recording media having excellent smoothness of surface, durability and magnetic characteristics can be easily prepared. Magnetic recording media of the invention can be advantageously utilized to prepare, for example, magnetic tapes, magnetic sheets and magnetic disks.

EP 0 483 406 A1

## BACKGROUND OF THE INVENTION

### Field of the invention

The present invention is related to a novel magnetic recording medium which is utilized as magnetic tapes, magnetic sheets, magnetic disks and the like. More particularly, the present invention is related to a novel high performance magnetic recording medium which utilizes a material prepared by graft polymerization of acrylic macromonomer to polyurethane resin and having excellent mechanical properties and ability to disperse magnetic powder in it and is excellent in smoothness of surface of magnetic layer, durability and magnetic properties.

### Prior art

Recently, magnetic recording media are widely utilized in audio instruments, video instruments, computers and other like instruments and demand for the magnetic recording media is rapidly growing. The magnetic recording madia have, in general, a structure comprising a non-magnetic supporting material, such as polyester film, and a magnetic layer coated on the supporting material, the magnetic layer consisting of magnetic powder and a binding material. The magnetic layer is prepared by coating dispersion of the magnetic powder in a medium containing the binding material on the surface of the non-magnetic supporting material or by transferring the dispersion on the surface of the supporting material.

The binding materials which have been generally utilized are polyester resins, cellulose resins, polyurethane resins, copolymers of vinyl chloride and vinyl acetate, copolymers of vinyl chloride, vinyl acetate and vinyl alcohol, copolymers of vinyl chloride and vinylidene chloride, copolymers of acrylonitrile and butadiene, phenolic resins, epoxy resins, polyamide resins, nitrocellulose, cellulose acetate butyrate, acrylic resins, resins curable by irradiation of electron beam and other like materials.

Each of these materials which have been generally utilized is characterized by its own good properties and problems and a magnetic layer having desirable properties is not obtained by use of a single material. Therefore, it is the general practice that two or more kinds of the material are used together or that dispersing agents are used in combination with the material.

For example, because polyurethane resin has excellent durablility, a magnetic recording medium having excellent mechanical properties can be prepared by utilizing it (Japanese Patent Publication Showa 58-8053). Thus, from the point of view of mechanical properties, polyurethane resin is a desirable material. However, polyurethane resin has a problem that, because it lacks in affinity with magnetic powder, sufficiently smooth surface, homogeneous dispersion and desirable magnetic characteristics are not easily obtained. Various methods have been attempted to solve the problems. For example, some other resins, such as copolymer of vinyl chloride and vinyl acetate, copolymer of vinyl chloride, vinyl acetate and vinyl alcohol and the like, or dispersing agents were used in combination with polyurethane resin. Introduction of various polar groups into polyurethane resin was also tried. However, it was found that the excellent mechanical properties which polyurethane resin originally has is inevitably damaged by these attempted improvements.

On the other hand, because acrylic resin has very high hardness and lower adhesive property and, therefore, is advantageous for reduction of friction resistance, the improvement on the problem of polyurethane resin was attempted by utilizing acrylic resin in combination with polyurethane resin. However, it was found that compatibility of acrylic resin and polyurethane resin is very low and the excellent properties of acrylic resin were not exhibited in the resultant materials.

## SUMMARY OF THE INVENTION

The present invention accordingly has an object to provide a magnetic recording medium which has excellent durability and mechanical properties and, at the same time, is excellent in smoothness of surface of the magnetic layer, homogeneity of dispersion of magnetic powder and magnetic characteristics and, thus, to solve the problem of conventional magnetic recording media in which polyurethane resin is used as binding material of the magnetic layer.

Thus, the magnetic recording medium of the invention comprises a non-magnetic supporting material and a magnetic layer which is made by dispersing ferromagnetic powder in a binding material and coated on the supporting material. The magnetic layer is characterized in that the binding material comprises a component made by graft polymerization of acrylic macromonomer having two terminal hydroxy functional groups and a molecular weight in the range from 1000 to 10000 to polyurethane resin.

DETAILED DESCRIPTION OF THE PREFERRED EMBODIMENTS

The present inventors studied extensively to develop high performance magnetic recording media to achieve the object described above and discovered that, by utilizing a material made by graft polymerizing macromonomer of a specific kind to polyurethane resin as the binding material in the magnetic layer, the problem of lower compatibility of acrylic resin and polyurethane resin is solved, excellent characteristics of acrylic resin is highly exhibited and the object of the invention can be achieved. Thus, the present invention was completed on the basis of this discovery.

The magnetic layer in the magnetic recording medium of the invention is prepared by dispersing ferromagnetic powder in a binding material comprising a component which is prepared by graft polymerization of acrylic macromonomer having two terminal hydroxy functional groups and a molecular weight in the range from 1000 to 10000 to polyurethane resin.

The polyurethane resin utilized for the graft polymerization is not particularly limited but polyurethane resins conventionally utilized as binding material, such as polyurethane resin prepared by reacting polyhydroxy compounds with polyisocyanates and, if desired, chain extenders according to generally known methods, can be utilized.

As the polyhydroxy compound which is utilized as one of the materials to prepare the polyurethane resin, any kind of polyhydroxy compounds which are generally utilized to prepare polyurethane resins can be selected and utilized. Preferable polyhydroxy compounds are compounds having terminal hydroxy groups and molecular weight in the range from 300 to 4000. Examples of such preferable hydroxy compounds are: polyesterpolyols, polytetramethylene ether glycols, poly-$\epsilon$-caprolactonediol, carbonate polyols, acrylic polyols, polypropylene glycol and the like.

Examples of the polyester polyols are compounds prepared from a glycol, such as ethylene glycol, propylene glycol, neopentyl glycol, 1,3-butanediol, diethylene glycol, 1,4-butanediol, 1,6-hexanediol, 1,4-cyclohexanedimethanol and the like, and a dicarboxylic acid, such as oxalic acid, malonic acid, succinic acid, glutaric acid, adipic acid, pimelic acid, suberic acid, azelaic acid, sebacic acid, 1,12-dodecane dicarboxylic acid, brasylic acid, fumaric acid, maleic acid, methylmaleic acid, methylfumaric acid, itaconic acid, citraconic acid, malic acid, methylmalic acid, phthalic acid, isophthalic acid, terephthalic acid, naphthalene dicarboxylic acid and the like. More particular examples of the polyester polyols are: polyethylene adipate, polyethylene propylene adipate, polyethylene butylene adipate, polydiethylene adipate, polybutylene adipate, polyethylene succinate, polybutylene succinate, polyethylene sebacate, polybutylene sebacate, polyhexamethylene adipate, polycyclohexyldimethylene adipate and the like. The polyhydroxy compounds can be utilized either singly or as combination of two or more compounds.

The polyisocyanate which is utilized as one of the materials to prepare the polyurethane resin is not particularly limited but any kind of isocyanates which are generally utilized to prepare polyurethane resins can be selected and utilized. Examples of the preferably utilized isocyanates are: tolylene diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanato-(diphenyl ether), mesitylene diisocyanate, 4,4'-methylene-bis-(phenyl isocyanate), durylene diisocyanate, 1,5-naphthalene diisocyanate, benzidine diisocyanate, o-nitrobenzidine diisocyanate, 4,4'-diisocyanatodibenzil, 1,4-tetramethylene diisocyanate, 1,6-hexamethylene diisocyanate, 1,10-decamethylene diisocyanate, 1,4-cyclohexylene diisocyanate, xylylene diisocyanate, 4,4'-methylene-bis-(cyclohexyl isocyanate), 1,5-tetrahydronaphthalene diisocyanate, isophoron diisocyanate and the like. The polyisocyates can be utilized either singly or as combination of two or more compounds.

Examples of the chain extender which is utilized in the preparation of the polyurethane resin according to desire are: ethylene glycol, propylene glycol, neopentyl glycol, 1,3-butanediol, diethylene glycol, 1,4-butanediol, 1,6-hexanediol, ethylenediamine, 1,2-propylenediamine, trimethylenediamine, tetramethylenediamine, hexamethylenediamine, decamethylenediamine, isophoronediamine, m-xylylenediamine, hydrazine, water and the like. The chain extenders can be utilized either singly or as combination of two or more compounds.

The polyurethane resin which is utilized for graft polymerization in the invention is prepared by reacting the polyhydroxy compound, the polyisocyanate and, according to desire, the chain extender by using generally known methods. However, it is preferable that, for the purpose of obtaining better dispersion of magnetic powder by enhancing the affinity between the magnetic powder and the polyurethane resin, at least one polar group selected from the group consisting of -COOM, $SO_3M$, $-OSO_3M$, $-PO_3M$ $-OPO_3M$ and a tertiary amine is introduced in the polyurethane resin. The character M in the polar groups is hydrogen atom or a cation. Examples of the cation are: cation of alkali metal such as sodium cation and potassium cation, ammonium cation, monoalkyl-, dialkyl- or trialkyl-substituted ammonium cation and the like.

Method of introducing the polar group into the polyurethane resin is not particularly limited but a suitable method can be selected from generally known methods depending upon the kind of the polar group to be introduced. Examples of such methods are: a method employing either one of a polyhydroxy compound comprising polar groups, a chain extender comprising polar groups or polyisocyanate comprising polar groups; a method employing a combination of these compounds; a method of converting polar groups contained in the polyurethane resin into other types of polar group and other like methods. An example of converting polar groups contained in the polyurethane resin into other types of polar group is introduction of polar hydroxy group into the polyurethane resin by suitably adjusting the charge ratio of materials at the time of preparation of the polyurethane resin, followed by conversion of the hydroxy group thus introduced into other types of polar group, such as $-OSO_3M$ and $-PO_3M$ wherein M is hydrogen or a cation as defined above.

More particularly, as an example of the method of introducing -COOM groups wherein M is hydrogen or a cation as defined above into polyurethane resin, polyurethane resin can be prepared by replacing a part of the polyhydroxy compound used for the preparation of the polyurethane resin by a polyol comprising carboxyl group in the main chain of the polyol through ester linkage. The polyol comprising carboxyl group can be prepared by reacting a polyol having three or more hydroxy functional groups with a polycarboxylic acid, preferably a polycarboxylic acid having an acid anhydride group in the molecule, in the way to have at least two hydroxy groups remaining in the resultant polyol.

Examples of the preferable polyol having three or more hydroxy functional groups are: polyfunctional alcohols of functionality of three or more, such as glycerol, diglycerol, polyglycerol, erythritol, pentaerythritol, arabitol, sorbitol, sorbitan, mannitol, mannitan, trimethylolpropane and the like; polyetherpolyols prepared by polymerizing alkylene oxides, such as ethylene oxide, propylene oxide, butylene oxide and the like, using the polyfunctional alcohol as an initiator; polyester polyols having hydroxy functionality of three or more which is prepared from one of these polyfunctional alcohols and polyester polyols and a dicarboxylic acid; polyalkylene oxides prepared by polymerizing the alkylene oxide using an organic polyamine as an initiator; polyfunctional polyesterpolyols having hydroxy fuctionality of three or more which is prepared from a dicarboxylic acid and the polyalkylene oxide; and other like compounds. Particularly preferable polyol among these compounds is polyethertriol having molecular weight in the range from about 90 to about 4,000.

Examples of the polycarboxylic acid which is utilized for the reaction with the polyol having three or more hydroxy functional groups are: oxalic acid, malonic acid, succinic acid, glutaric acid, adipic acid, pimelic acid, suberic acid, azeraic acid, sebacic acid, fumaric acid, maleic acid, methylmaleic acid, methylfumaric acid, itaconic acid, citraconic acid, mesaconic aid, acetylenic acid, malic acid, methylmalic acid, citric acid, isocitric acid, tartaric acid, phthalic acid, isophthalic acid, terephthalic acid, trimeritic acid, pyromeritic acid, naphthalene dicarboxylic acid and reactive derivatives of these acids, such as alkyl ester, halide, anhydride and the like. It is particularly preferable that an acid capable of forming anhydride is converted into an anhydride and utilized for the reaction.

It is preferable that the condition of the reaction of the polyol having three or more hydroxy functional groups and the polycarboxylic acid is adjusted so that the resultant polyol thus modified with the carboxylic acid has two hydroxy groups. For example, reaction of one mole of a triol with one mole of a dicarboxylic acid is preferred. Reaction of a polyol with a polycarboxylic acid, particularly, reaction of a polyol with anhydride of a polycarboxylic acid, is very facile and easily conducted according to generally practiced methods. The reaction of a polyol with a polycarboxylic acid may be made either during or after the process of preparation of the polyurethane resin. It is most preferable, however, that the polyol is modified with the carboxylic acid before the polyol is utilized for preparation of the polyurethane resin.

As a particular example of introducing tertiary amine groups into polyurethane resin as the polar group selected from the polar groups described above, polyurethane resin can be prepared by replacing a part of the polyhydroxy compound used for the preparation of the polyurethane resin by a polyol comprising tertiary amine in it. Examples of such polyol comprising tertiary amine are compounds having a general formula:

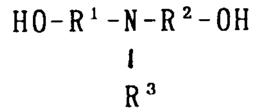

--- (I)

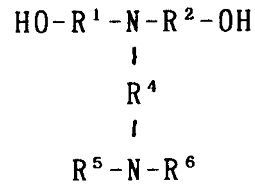

--- (II)

or

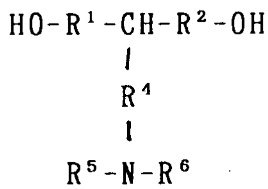

--- (III)

wherein $R^1$, $R^2$ and $R^4$ are $-(-CH_2-)_n-$ or $-(-CH_2CHR^7O-)_n-$ (n is an integer from 1 to 30, and $R^7$ is hydrogen atom or methyl group) and $R^3$, $R^5$ and $R^6$ are alkyl groups having carbon atoms in the range from 1 to 20.

Examples of the compound shown by the general formula (I) are: N-methyldiethanolamine; N-ethyldiethanolamine; N-propyldipropanolamine; N-butyldipropanolamine; N-pentyldibutanolamine; N-cyclohexyldiethanolamine; compounds prepared by addition of an alkylene oxide, such as ethylene oxide, propylene oxide and the like, or a caprolactone, such as ε-caprolactone and the like, to the amines described above; and compounds made by addition of an alkylene oxide, such as ethylene oxide, propylene oxide and the like, or a caprolactone, such as ε-caprolactone and the like, to ethylamine, ethylamine, propylamine, butylamine, pentylamine, hexylamine and the like.

Examples of the compound shown by the general formula (II) are: compounds prepared by addition of an alkylene oxide, such as ethylene oxide, propylene oxide and the like, or a caprolactome, such as ε-caprolactone and the like, to a compound having a primary or tertiary amino group, such as 3-dimethylaminopropylamine, 3-dimethylaminobutylamine, 3-diethylaminopropylamine, 4-dipropylaminotetramethyleneamine, 6-dibutylaminohexamethyleneamine and the like.

The amount of the polar group which is introduced into the polyurethane resin is preferably in the range from $10^{-10}$ to $10^{-3}$ mole per 1 g of the resin. When the amount of the polar group in the polyurethane resin is less than $10^{-10}$ mole per 1 g of the resin, the effect of the polar group introduced into the resin is not sufficient to achieve the object of the invention. When the amount of the polar group is more than $10^{-3}$ per 1 g of the resin, the effect of the polar group introduced into the resin does not increase as expected form the increased amount of the polar group and, furthermore, the excellent mechanical properties inherent to the polyurethane resins tends to be deteriorated. Thus, the conditions outside of the range are not desirable.

It is essential in the present invention that the material which is prepared by graft polymerization of acrylic macromonomer having two terminal hydroxy groups to polyurethane resin is employed as a component of the binding material for the magnetic layer.

The macromonomer utilized herein is an acrylic macromonomer having two terminal hydroxy groups. It is preferred that the macromonomer comprises segments consisting of methyl methacrylate unit alone or segments consisting of methyl methacrylate unit and either one or both of dimethylaminoethyl methacrylate unit and methacrylic acid unit wherein the combined amount of the dimethylaminoethyl methacrylate unit and the methacrylic acid unit is equal to or less than 50 weight parts per 100 weight parts of the methyl methacrylate unit. It is essential that the molecular weight of the macromonomer is in the range from 1,000 to 10,000 because the effect of the macromonomer is insufficient for achieving the object of the invention when the molecular weight of the macromonomer is outside of the above range.

As for the amount of macromonomer graft polymerized to the polyurethane resin, the acrylic macromonomer having two terminal hydroxy groups is employed generally in the amount in the range from 5 to 150 weight parts per 100 weight parts of the polyurethane resin. When the amount of the macromonomer employed is less than 5 weight parts per 100 weight parts of the polyurethane resin, the effect of the graft polymerized macromonomer is insufficient for achieving the object and, when the amount is more than 150 weight parts, the excellent mechanical properties inherent to the polyurethane resins tends to be deteriorated. Thus, the conditions outside of the range are not desirable.

In the magnetic recording medium of the invention, other resins may be utilized as components of the binding material of the magnetic layer in combination with the modified polyurethane resin prepared by graft polymerizing acrylic macromonomer having two terminal hydroxy groups to the polyurethane resin so far as the utilization of the other resins does not damage the object of the invention. Examples of the other resins are: polyvinyl chloride resins, polyvinylidene chloride resins, vinyl chloride-vinyl acetate copolymer resins, vinyl chloride-vinyl acetate-vinyl alcohol copolymer resins, alkyd resins, epoxy resins, acrylonitrile-butadiene copolymer resins, polyurethane resins, nitrocellulose resins, polybutylol resins, polyester resins, silicone resins, melamine resins, urea resins, acrylic resins, polyamide resins and the like. These resins may be utilized either singly or as a combination of two or more kinds. Most preferable resin among these resins is vinyl chloride-vinyl acetate-vinyl alcohol copolymer resin.

Examples of the ferromagnetic powder utilized in the magnetic layer of the invention are iron, chromium, nickel, cobalt and alloys, oxides and modifications of these metals. More particularly, fine powder of $\gamma$-$Fe_2O_3$, ferrite, magnetite, $CrO_2$, $\gamma$-$Fe_2O_3$ doped with cobalt, berthollide compounds of $Fe_2O_3$ and $Fe_3O_4$ doped with cobalt and the like are utilized. The ferromagnetic powder may be utilized either singly or as a combination of two or more kinds.

The resin for the binding material and the ferromagnetic powder are generally utilized as a solution and dispersion in an organic solvent because the resin is dissolved in the solvent and, at the same time, the powder is dispersed in the solvent Examples of the preferable organic solvent are: methyl ethyl ketone, methyl n-propyl ketone, methyl isobutyl ketone, diethyl ketone, methyl formate, ethyl formate, propyl formate, methyl acetate, ethyl acetate, butyl acetate, acetone, cyclohexanone, tetrahydrofuran, dioxane, methanol, ethanol, isopropyl alcohol, butanol, methylcellosolve, butylcellosolve, cellosolve acetate, dimethyl formamide, dimethylsulfoxide, pentane, hexane, cyclohexane, heptane, octane, mineral spirits, petroleum ether, gasoline, benzene, toluene, xylene, chloroform, carbon tetrachloride, chlorobenzene, perchloroethylene, trichloroethylene and the like. These organic solvents may be utilized either singly or as a mixture of two or more kinds.

The dispersion is generally prepared in such a manner that the contents of the organic solvent, the binding material and the ferromagnetic powder are in the range from 50 to 90 weight percent, from 5 to 20 weight percent and from 10 to 50 weight percent, respectively, based on the total weight of the dispersion. Other generally known additive components, such as dispersing agents, pigments, fillers, plasticizers, antistatic agents, surface active agents, lubricants, crosslinking agents, antioxidants, stabilizers, antifoaming agents and the like, may be utilized according to desire so long as the object of the invention is not damaged.

The method of preparation of dispersion is not particularly limited but generally practiced methods for preparation of dispersion can be utilized. For example, the components of the dispersion can be homogeneously mixed and dispersed by means of a ball mill, a mixer, a roll mill, a beads mill, a gravel mill, a sand mill, a high speed impeller and the like either after the components are mixed in advance or while the components are being added consecutively. The condition for the preparation of the dispersion is generally different depending upon the kind and size of the ferromagnetic powder utilized therein and also upon the application of the product but the treatment of the dispersion at the temperature in the range from the room temperature to 100 °C for 5 minutes to 20 hours is generally suitable.

The magnetic layer in the magnetic recording medium of the invention can be prepared, for example, by coating the dispersion prepared according to the methods described above on at least one side of the non-magnetic supporting material to the dried thickness in the range from 0.5 to 20$\mu$ by utilizing a suitably selected method, followed by drying of the coated layer. As another example of the method of preparation, the magnetic layer can be prepared by forming a magnetic layer on a separate base sheet, such as release paper, by coating the dispersion on the base sheet and drying the dispersion, followed by transferring the magnetic layer formed on the base sheet to the non-magnetic supporting material. The suitable methods of coating, drying and transferring can be selected from generally known methods and utilized.

The non-magnetic supporting material utilized in the invention is not particularly limited but a suitable material can be selected from materials which are generally utilized for magnetic recording media, such as polyester film, polypropylene film, cellulose triacetate film, cellulose diacetate film, polycarbonate film and the like, having thickness in the range from 5 to 50μ.

The invention will be understood more readily with reference to the following examples. However, these examples are intended to illustrate the invention and are not to be construed to limit the scope of the invention.

Example of preparation of resin 1. Polyurethane resin modified with carboxyl group

A mixture of 223 g of polycarbonatediol having hydroxy value of 56, 56 g of acrylic macromonomer having terminal hydroxy groups which comprises segments containing methyl methacrylate unit and methacrylic acid unit in a weight ratio of 9 to 1 and having a molecular weight of 6000, 21.0 g of polypropylenediol modified with carboxyl group, 30 g of 1,3-butanediol, 214g of 4,4'-diphenylmethane diisocyanate, 593 g of methyl ethyl ketone and 254 g of cyclohexanone was heated for 8 hours at 100°C for the reaction and polyurethane resin modified with carboxyl group and graft polymerized with acrylic macromonomer was prepared.

The polypropylenediol modified with carboxyl group utilized here was prepared by reaction of 1000 weight parts of an addition product of propylene oxide having molecular weight of about 1500 with 66.7 weight parts of succinic anhydride and had hydroxy value of 69.

Example of preparation of resin 2. Polyurethane resin modified with amino group

A mixture of 208.0 g of polycarbonatediol having a hydroxy value of 56, 52.0 g of acrylic macromonomer having terminal hydroxy groups which comprises segments containing methyl methacrylate unit alone and has molecular weight of 6000, 40 g of polyoxypropylene dimethylamino ether, 30.0 g of 1,3-butanediol, 119 g of 4,4'-diphenylmethane diisocyanate, 584.0 g of methyl ethyl ketone and 250.0 g of cyclohxanone was heated for 8 hours at 100°C for reaction and a polyurethane resin modified with amino group and graft polymerized with acrylic macromonomer was prepared.

Example of preparation of resin 3. Polyurethane resin without graft polymerization of an acrylic macromonomer

A mixture of 300 g of polycarbonatediol having hydroxy value of 56, 30 g of 1,3-butanediol, 121 g of 4,4'-diphenylmethane diisocyanate, 251 g of cyclohexanone and 586 g of methyl ethyl ketone was heated for 8 hours at 100°C for reaction and polyurethane resin was prepared.

Example 1

A magnetic coating composition comprising:

| | |
|---|---|
| magnetic iron oxide powder containing cobalt | 80 weight parts |
| Polyurethane resin of Example of preparation of resin 1 | 10 weight parts |
| VAGH (a product of UCC Corporation) | 10 weight parts |
| alumina powder | 10 weight parts |
| myristic acid | 5 weight parts |
| stearic acid | 5 weight parts |
| cyclohexanone | 100 weight parts |
| methyl ethyl ketone | 50 weight parts |
| toluene | 50 weight parts |

was processed to make a homogeneous dispersion by using a sand grinder. Three weight parts of Coronate L (a product of Nippon Polyurethane Co., Ltd) was added to the dispersion and the mixture was stirred and then filtered. The material remained on the filter was coated on a film of polyethylene terephthalate and dried. The coated film was treated with mirror finish and cut to a specified width and, thus, video tape was prepared.

The video tape was evaluated about dynamic friction coefficient, durability and rectangular response ratio. The results are shown in Table 1.

Example 2

Video tape was prepared and evaluated by the similar method as the method of Example 1 except that the polyurethane resin prepared by Example of preparation of resin 2 was used in place of the polyurethane resin prepared by Example of preparation of resin 1. The results are shown in Table 1.

Comparative example 1

Video tape was prepared and evaluated by the similar method as the method of Example 1 except that the polyurethane resin prepared by Example of preparation of resin 3 was used in place of the polyurethane resin prepared by Example of preparation of resin 1 and MR-110 (a product of Nippon Zeon Co., Ltd., polyvinyl chloride resin containing $-SO_3Na$ functional group) in place of VACH. The results are shown in Table 1.

Evaluation of physical properties was made according to the following methods:

(1) Dynamic friction coefficient

Video tape was hung over a steel rod of 3 cm diameter and a weight of $T_1$, which was 50 g in the present examples, was placed at one end of the tape. The steel rod was rotated at the speed of 1 m per second and the tension at the other end of the tape $T_2$ was measured. Dynamic friction coefficient was calculated by the following equation:

Dynamic friction coefficient: $\mu = (1/\pi)\mathrm{Ln}(T_2/T_1)$

(2) Durability

Surface of the test tape was observed by a microscope after the friction test for 10 minutes and evaluated by degree of formation of scratch on the surface.

(3) Rectangular response ratio

Rectangular response ratio was measured by a B-H tracer.

To summarize the advantages obtained by the invention, because the material which is prepared by graft polymerization of acrylic macromonomer having terminal hydroxy groups to polyurethane resin is utilized as the binding material for magnetic layer, the problem of compatibility which occurs when acrylic resins and polyurethane resins are mixed together is solved and excellent properties of both of acrylic resins and polyurethane resins are exhibited simultaneously. Furthermore, because the specific polar groups are introduced into the polyurethane resins which are subject to the graft polymerization, the affinity between the binding material and magnetic powder is enhanced and, thus, the magnetic powder is dispersed into the binding material more homogeneously. As the result of these effects, high performance magnetic recording media having excellent smoothness of surface, durability and magnetic characteristics can be easily prepared.

Because the magnetic recording media of the invention have excellent properties as described above, they can be advantageously utilized to prepare, for example, magnetic tapes, magnetic sheets and magnetic disks.

TABLE 1

| | Dynamic friction coefficient | Durability | Rectangular response ratio |
|---|---|---|---|
| Example 1 | 0.25 | No scratch observed | 0.89 |
| Example 2 | 0.29 | No scratch observed | 0.85 |
| Comparative example 1 | 0.60 | Numerous perpendicular scratches | 0.87 |

## Claims

1. A magnetic recording medium comprising a non-magnetic supporting material and a magnetic layer which is made by dispersing ferromagnetic powder in a binding material and coated on the supporting material, which is characterized in that the binding material comprises a component made by graft polymerization of acrylic macromonomer having two terminal hydroxy functional groups and a molecular weight in the range from 1000 to 10000 to polyurethane resin.

2. A magnetic recording medium as claimed in Claim 1 wherein the polyurethane resin comprises at least one kind of polar group in the range from $10^{-10}$ to $10^{-3}$ mole per gram of the resin, the polar group being selected from the group consisting of -COOM group, $-SO_3M$ group, $OSO_3M$ group, $-PO_3M$ group, $-OPO_3M$ group and a tertiary amino group wherein M is hydrogen atom or a cation.

3. A magnetic recording medium as claimed in Claim 1 wherein the acrylic macromonomer having two terminal hydroxy functional groups comprises segments consisting of methyl methacrylate unit alone or segments consisting of methyl methacrylate unit and either one or both of dimethylaminoethyl methacrylate unit and methcarylic acid unit wherein the combined amount of the dimethylaminoethyl methacrylate unit and the methacrylic acid unit is equal to or less than 50 weight parts per 100 weight parts of the methyl methacrylate unit.

4. A magnetic recording medium as claimed in Claim 2 wherein the acrylic macromonomer having two terminal hydroxy functional goups comprises segments consisting of methyl methacrylate unit alone or segments consisting of methyl methacrylate unit and either one or both of dimethylaminoethyl methacrylate unit and methcarylic acid unit wherein the combined amount of the dimethylaminoethyl methacrylate unit and the methacrylic acid unit is equal to or less than 50 weight parts per 100 weight parts of the methyl methacrylate unit.

European Patent Office

# EUROPEAN SEARCH REPORT

Application Number

EP 90 12 0964

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | REFRACTORIES; CERAMICS, week 8917, abstract no. 89-12681/17; & JP-A-1 073 526 (HITACHI MAXELL) 17-03-1989<br>* Abstract *<br>--- | 1 | G 11 B 5/702 |
| A | IDEM<br>--- | 2-4 | |
| A | REFRACTORIES; CERAMICS, week 8608, abstract no. 86-050990/08; & JP-A-61 003 320 (RICOH K.K.) 09-01-1986<br>* Abstract *<br>--- | 1-4 | |
| A | REFRACTORIES; CERAMICS, week 8507, abstract no. 85-041730/07; & JP-A-60 001 621 (RICOH K.K.) 07-01-1984<br>--- | 1-4 | |
| A | REFRACTORIES; CERAMICS, week 8515, abstract no. 85-089726/15; & JP-A-60 038 722 (RICOH K.K.) 28-02-1985<br>--- | 1-4 | |
| E | REFRACTORIES; CERAMICS, week 9113, abstract no. 91-090041/13; & JP-A-3 034 118 (DAINICHI SEIKA COLOR CHEM. (UKIM-) 14-02-1991<br>* Abstract *<br>----- | 1-4 | TECHNICAL FIELDS SEARCHED (Int. Cl.5)<br>G 11 B |

The present search report has been drawn up for all claims

| Place of search | Date of completion of the search | Examiner |
|---|---|---|
| THE HAGUE | 21-06-1991 | VITZTHUM N.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)